# EUROPÄISCHE PATENTANMELDUNG

(11) **EP 1 884 627 A1**
(43) Veröffentlichungstag der Anmeldung: **06.02.2008**
(21) Anmeldenummer: 06405333.3
(22) Anmeldetag: 04.08.2006
(51) Int. Cl.: F01D 25/04, F02C 6/12

(54) **Schüttgutdämpfer**

(71) Anmelder: ABB Turbo Systems AG, 5400 Baden (CH)
(72) Erfinder: Bättig, Josef, 5704 Egliswil (CH); Rohne, Karl-Heinz, 5234 Villigen (CH); Tröndle, Alfons, 79804 Dogern (DE)
(74) Vertreter: ABB Patent Attorneys

(57) **Zusammenfassung**

Bei einem Turbolader entstehen konstruktionsbedingt zahlreiche Hohlräume (31). Werden solche Hohlräume mit Schüttgut gefüllt, können kostengünstige Dämpfer realisiert werden.

Zudem ergeben sich Vorteile bezüglich zusätzlicher Containmentsicherheit beim allfälligen Bersten des Verdichterrades sowie Lärmdämmung.

## Beschreibung

### Technisches Gebiet

Die Erfindung bezieht sich auf das Gebiet der Abgasturbolader für aufgeladene Brennkraftmaschinen.

### Stand der Technik

Abgasturbolader zur Aufladung von Verbrennungsmotoren weisen in den meisten Fällen beim Verdichtereintritt einen Filterschalldämpfer auf. Diese Schalldämpfer mit aufgesetztem Filter werden vorzugsweise mittels eines Befestigungsflanschs starr mit dem Verdichtergehäuse verbunden.

Der Abgasturbolader wird entweder direkt oder mittels einem speziellen Fuss auf der Motorkonsole befestigt. In den meisten Fällen ist die axiale Distanz zwischen Fuss und Schalldämpfer sehr gross. Durch Motorvibrationen kann der Schalldämpfer zu unzulässig grossen Schwingungen angeregt werden. Dies insbesondere dann, wenn die Eigenfrequenz des Schalldämpfers nur unwesentlich über jenen der Turboladerbefestigungen liegt. In diesem Fall treten beim Schalldämpfer unzulässige Schwingungsüberhöhungen auf.

Eine Möglichkeit, solche Schwingungsüberhöhungen zu vermeiden, ist in der DE 103 60 770 offenbart. Der Schalldämpfer ist dabei in einem ersten Verbindungsbereich starr am Verdichtergehäuse befestigt und liegt in einem zweiten Verbindungsbereich mit einer Auflagefläche auf einer Auflagefläche am Verdichtergehäuse auf, wobei der Schalldämpfer durch die Auflage im zweiten Verbindungsbereich gegenüber der starren Befestigung im ersten Verbindungsbereich mit einer Vorspannung beaufschlagt ist. Durch die Vorspannung wird die Eigenfrequenz des Schalldämpfers angehoben womit unzulässige Schwingungsüberhöhungen des Schalldämpfers verhindern werden können.

### Kurze Darstellung der Erfindung

Die Aufgabe der vorliegenden Erfindung besteht darin, einen Abgasturbolader derart zu verbessern, dass unzulässige Schwingungsüberhöhungen unterdrückt werden können.

Erfindungsgemäss wird diese Aufgabe durch Anordnung eines mit Schüttgut gefüllten Hohlraums im Bereich des Verdichters des Turboladers gelöst.

Ein mit Schüttgut befüllter Hohlkörper weist unter Schwingbeanspruchung ein ausgezeichnetes Dämpfungsvermögen auf.

Bei einem Turbolader entstehen konstruktionsbedingt zahlreiche Hohlräume. Diese Hohlräume können als Behälter zur Aufnahme des erwähnten Schüttgutes genutzt werden. Dadurch kann einerseits ein kostengünstiger Dämpfer realisiert werden, welcher zudem auch ästhetisch zu befriedigen vermag.

Die Befüllung mit Schüttgut bringt zudem noch Vorteile bezüglich zusätzlicher Containmentsicherheit beim allfälligen Bersten des Verdichterrades sowie Lärmdämmung.

Weitere Vorteile ergeben sich aus den abhängigen Ansprüchen.

### Kurze Beschreibung der Zeichnungen

Folgend sind anhand der Zeichnungen Ausführungsformen des Abgasturboladers mit erfindungsgemäss mit Schüttgut gefüllten Hohlräumen beschrieben. Hierbei zeigt
- Fig. 1: eine Ausführungsform mit einem mit Schüttgut gefüllten Hohlraum seitlich am Verdichtergehäuse gegen den Filterschalldämpfer, integriert im Austrittsgehäuse des Verdichters,
- Fig. 2: eine Ausführungsform mit einem mit Schüttgut gefüllten Hohlraum seitlich am Verdichtergehäuse gegen den Filterschalldämpfer, integriert ein einem separaten Gehäuseeinsatz des Verdichters,
- Fig. 3: eine Ausführungsform mit einem mit Schüttgut gefüllten Hohlraum seitlich am Filterschalldämpfer gegen das Verdichtergehäuse,
- Fig. 4: eine Ausführungsform mit einem mit Schüttgut gefüllten Hohlraum seitlich zwischen Filterschalldämpfer und Verdichtergehäuse,
- Fig. 5: eine Ausführungsform mit einem mit Schüttgut gefüllten Hohlraum radial aussen am Verdichtergehäuse, und
- Fig. 6: die Ausführungsform gemäss Fig. 3 mit einem separaten, mit Schüttgut gefüllten Hohlraum seitlich am Filterschalldämpfer.

### Weg zur Ausführung der Erfindung

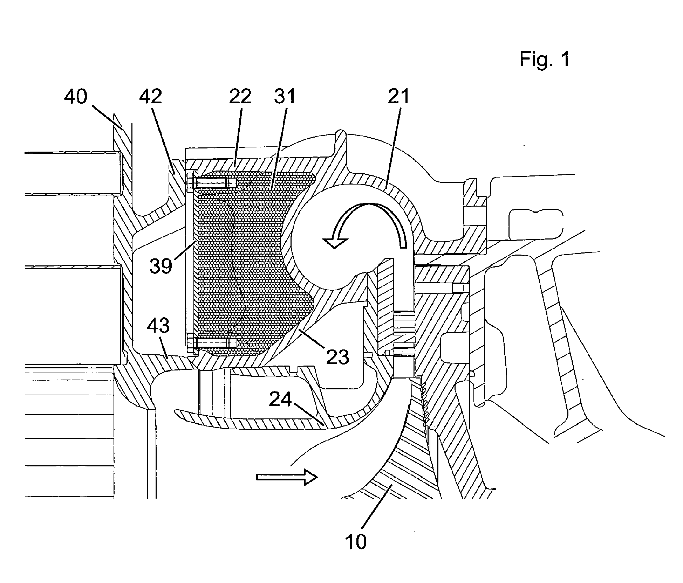

Fig. 1 zeigt die Verdichterseite eines Abgasturboladers. Das Verdichterrad 10 ist drehbar gelagert und von einem Verdichtergehäuse umgeben. Der Strömungsweg des zu verdichtenden Mediums ist mit den Pfeilen angedeutet. Das Verdichtergehäuse umfasst in der dargestellten Ausführungsform zwei integral mit dem Austrittsgehäuse 21 ausgebildete Flansche 22 und 23 zur Befestigung des Filterschalldämpfers 40 an dem Verdichtergehäuse. Hierfür umfasst der Filterschalldämpfer ebenfalls zwei Flanschen 42 und 43. Radial innerhalb der beiden Befestigungsflansche 22 und 23 umfasst das Verdichtergehäuse eine Einsatzwand 24, welche im Bereich des Verdichterrades den Strömungskanal des zu verdichtenden Mediums begrenzt.

Erfindungsgemäss ist der sich zwischen dem radial äusseren Flansch 22 und dem radial inneren Flansch 23 erstreckende Hohlraum 31 zum Dämpfen von Schwingungen am Abgasturbolader mit Schüttgut gefüllt. Der Hohlraum 31 ist mit einem Hohlraumverschluss 39 verschlossen. In der dargestellten Ausführungsform ist der Hohlraumverschluss eine Platte, welche mittels Schrauben über der Öffnung zwischen den beiden Flanschen 22 und 23 festgeschraubt ist. Diese Öffnung kann sich über einen Teil oder über den gesamten Umfang erstrecken. Ist nur ein Teil entlang des Umfangs geöffnet, ergeben sich Vorteile beim Einfüllen und Verschliessen, ist der gesamte Umfang geöffnet, ergeben sich insbesondere Vorteile beim leeren des Hohlraums.

Der Begriff Schüttgut bezeichnet dabei eine Ansammlung von Partikeln, die im Verhältnis zur Gesamtmenge klein und von in etwa gleicher Korngrösse sind. Schüttgut ist loses, trockenes Haufwerk. Typische Schüttgüter sind Baustoffe wie Sand, Kies, Schotter aber auch Stahlkugeln, oder allgemein kleine in etwa kugel- oder zylinderförmige Pellets aus gepresstem Material. Ein Schüttgut kann sich nach Überschreiten einer Aktivierungsenergie als Fluid verhalten, also fliessen. Die Partikel bleiben dabei im wesentlichen erhalten, bzw. verändern ihre Form nicht. Somit kann das Schüttgut durch die unverschlossene Öffnung in das Innere des Hohlraums gegossen werden, bevor anschliessend mit dem Hohlraumverschluss der Hohlraum abgedichtet wird.

Der Hohlraum kann vollständig oder nur teilweise mit Schüttgut gefüllt sein. Bleibt ein Teil des Hohlraums frei von Schüttgut, ermöglicht dies ein gewisser Fluss der einzelnen Partikel des Schüttguts. Ist dies nicht erwünscht, ist der Hohlraum vollständig zu füllen. Der Hohlraum kann mittels Rippen unterteilt sein. Dies hat den Vorteil, dass bei teilweiser Füllung des in mehrere Teile unterteilten Hohlraums eine gleichmässige Verteilung des Schüttgutes über den Umfang gewährleistet bleibt.

Zur Verstärkung der Dämpfungswirkung kann dem Schüttgut Gummigranulat oder Gummimehl beigemischt werden, oder das Schüttgut kann zusammen mit einer Flüssigkeit, vorzugsweise einer dämpfenden Flüssigkeit in den Hohlraum eingefüllt werden. Zur Verhinderung von Verschleiss an den Wänden des Hohlraums, können die Gehäusewände an der Innenseite des Hohlraums gehärtet oder aufgummiert werden. Eine Aufgummierung der Gehäusewände im Innern des Hohlraums führt auch zu einer Verbesserung der Dämpfungswirkung.

Die Anordnung des mit Schüttgut gefüllten Hohlraums im Bereich zwischen dem Austrittsgehäuse 21 des Verdichters und dem Filterschalldämpfer erhöht den Berstschutz (Containment). Sollte sich das Verdichterrad 10 von der Turbinenachse lösen oder gar in einzelne Bruchstücke zerbersten, so führt der radial ausserhalb des Strömungskanals im Ansaugbereich des Verdichterrades angeordnete, mit Schüttgut gefüllte Hohlraum dazu, dass das Verdichterrad oder Bruchstücke davon, nicht in radialer Richtung das Gehäuse durchschlagen. Die grosse Massenträgheit des Schüttguts absorbiert einen grossen Teil der Berstenergie durch innere Reibung der einzelnen Schüttgutpartikel. Somit lässt sich ein einfacher, aber effektiver Berstschutz realisieren, welcher sogar bei bestehenden Turboladern nachgerüstet werden kann, indem vorhandene Hohlräume mit Schüttgut gefüllt und anschliessend abgedeckt werden.

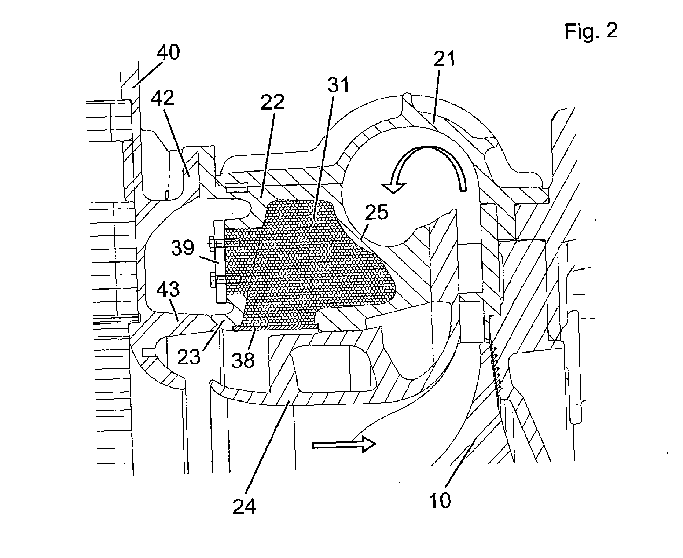

Fig. 2 zeigt die Ausführungsform nach Fig. 1 jedoch mit einem separaten Gehäuseeinsatz 25, welcher zwischen dem Austrittsgehäuse 21 und der Einsatzwand 24 eingeschoben ist. Der mit Schüttgut gefüllte Hohlraum 31 befindet sich im Innern des Gehäuseeinsatzes zwischen dem 23 und dem an den Strömungskanal grenzenden Gehäuseteil. Der Hohlraumverschluss 39 ist wiederum als festgeschraubte Platte ausgebildet, welche eine in den Gehäuseeinsatz eingelassene Öffnung abdeckt. In der dargestellten Ausführungsform ist ein bestehender Hohlraum eines Verdichters mit Schüttgut gefüllt, welcher mittels einer zusätzlichen ringförmigen Abdeckung 38 abgedichtet ist. Mittels solcher Hohlraumabdeckungen können Gehäusewölbungen zu geschlossenen, ringförmigen Hohlräumen umgebaut werden.

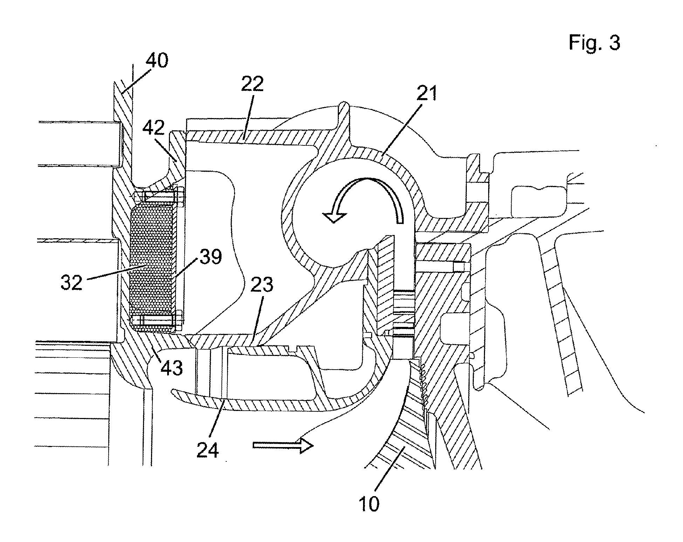

Fig. 3 zeigt eine Ausführungsform bei welcher der mit Schüttgut gefüllte Hohlraum 32 am Gehäuse des Filterschaldämpfers 40 ausgebildet ist. Der Filterschalldämpfer umfasst ebenfalls zwei umlaufende Flansche 42 und 43, zwischen denen sich der umlaufende Hohlraum erstreckt, welcher mittels eines plattenförmigen Hohlraumverschlusses 39 verschlossen ist.

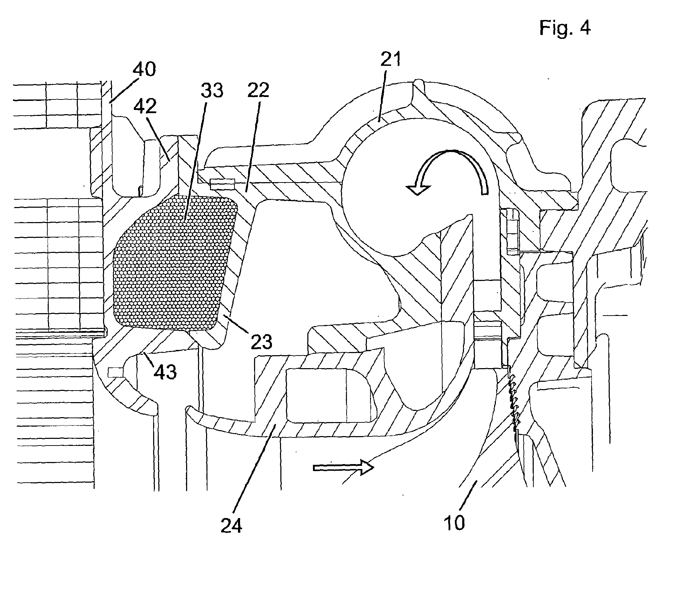

Fig. 4 zeigt eine Ausführungsform bei welcher sich der mit Schüttgut gefüllte Hohlraum 33 zwischen den zusammengefügten Verdichtergehäuse 21 und Gehäuse des Filterschalldämpfers 40 erstreckt. Der Hohlraum wird dabei durch die radial innen und aussen angeordneten Flansche 22 und 42 bzw. 23 und 43 begrenzt. Die Füllung des Hohlraumes erfolgt durch eine separate, nicht dargestellte Öffnung, beispielsweise im Verbindungskragen des Flansches 42 zum Filterschaldämpfer 40, welche mittels eines Hohlraumverschlusses verschlossen werden kann.

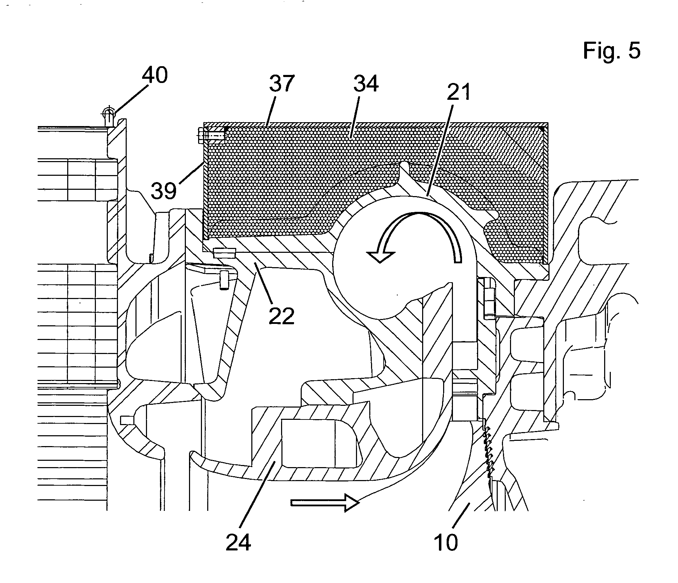

Fig. 5 zeigt eine Ausführungsform bei welcher der mit Schüttgut gefüllte Hohlraum 34 das gesamte Verdichtergehäuse radial umschliesst. Radial innen ist der Hohlraum durch das Austrittsgehäuse 21 begrenzt. Radial aussen umschliesst ein Hohlraumgehäuse 37 den Hohlraum. Die Öffnung zum Abfüllen des Schüttguts ins Innere des Hohlraumes ist an einer der axialen Stirnseiten des Hohlraums angeordnet und mittels eines plattenförmigen Hohlraumverschlusses verschlossen. Alternativ kann die Öffnung auch auf der Mantelfläche des Hohlraumgehäuses 37, also radial gegen aussen angeordnet sein. Das Hohlraumgehäuse 37 kann, wie dargestellt, zylindrisch mit einem rechteckigen Querschnitt ausgebildet sein, oder aber über einen teilkreis-oder teilellipsenförmigen Querschnitt verfügen.

Bei der Anordnung des mit Schüttgut gefüllten Hohlraums im radial äusseren Bereich des Verdichtergehäuses gem. Fig. 5 verbessert sich die Wärme und Schallisolation, so dass auf eine konventionelle Wärme- und Schallisolation verzichtet werden kann.

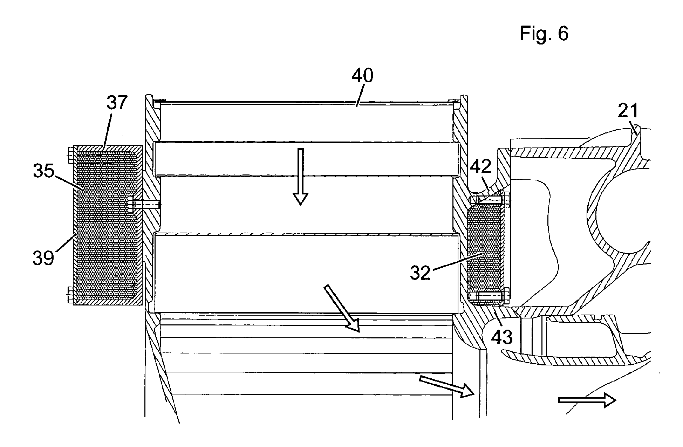

Fig. 6 zeigt die Ausführungsform nach Fig. 3, bei welcher ein mit Schüttgut gefüllter Hohlraum 32 am Gehäuse des Filterschaldämpfers 40 ausgebildet ist, jedoch mit einem zusätzlichen mit Schüttgut gefüllten Hohlraum 35 am gegenüberliegenden Ende des Filterschalldämpfers. Dieser zusätzliche Hohlraum kann als ein umlaufender evtl. mittels radialer Rippen unterteilter Ringhohlraum ausgebildet sein, oder mehrere separate Boxen umfassen. In dieser Ausführungsform befindet sich der mit Schüttgut gefüllte Hohlraum 35, also der Schüttgutdämpfer, in einer Zone mit grossen Schwingungsamplituden. Somit kann eine verstärkte Dämpfung erzielt werden. Dieser zusätzliche Schüttgutdämpfer kann als Modul optional d.h. alleine oder zusätzlich an den Filterschalldämpfer befestigt werden, falls etwa der integrierte Schüttgutdämpfer nicht ausreichen würden.

### Bezugszeichenliste

- 10: Verdichterrad
- 21: Austrittsgehäuse des Verdichtergehäuses
- 22: äusserer Befestigungsflansch des Verdichtergehäuses
- 23: innerer Befestigungsflansch des Verdichtergehäuses
- 24: Einsatzwand des Verdichtergehäuses
- 25: Gehäuseeinsatz des Verdichtergehäuses
- 31 bis 35: mit Schüttgut gefüllter Hohlraum
- 37: Hohlraumgehäuse
- 38: Hohlraumabdeckung
- 39: Hohlraumverschluss
- 40: Filterschalldämpfer
- 42: äusserer Befestigungsflansch des Filterschalldämpfergehäuses
- 43: innerer Befestigungsflansch des Filterschalldämpfergehäuses

## Patentansprüche

1. Abgasturbolader, umfassend ein Gehäuse mit mindestens einem Hohlraum (31, 32, 33, 34, 35), **dadurch gekennzeichnet, dass** mindestens ein Hohlraum (31, 32, 33, 34, 35) zumindest teilweise mit Schüttgut gefüllt ist.

2. Abgasturbolader gemäss Anspruch 1, **dadurch gekennzeichnet, dass** der Hohlraum (31, 32, 33, 34, 35) durch einen Hohlraumverschluss (39) begrenzt ist, und dass der Hohlraumverschluss (39) zum Einschütten von Schüttgut in den Hohlraum geöffnet und anschliessend wieder verschlossen werden kann.

3. Abgasturbolader gemäss einem der Ansprüche 1 oder 2, **dadurch gekennzeichnet, dass** der Abgasturbolader einen Verdichter mit einem Ansaugbereich umfasst, und dass der Hohlraum (31, 32, 33, 34, 35) radial ausserhalb des Ansaugbereichs des Verdichters angeordnet ist.

4. Abgasturbolader gemäss einem der Ansprüche 1 bis 3, **dadurch gekennzeichnet, dass** der Abgasturbolader einen Verdichter und einen dem Verdichter benachbart angeordneten Filterschalldämpfer (40) umfasst, und dass der Hohlraum (32, 33, 35) durch den Filterschalldämpfer (40) begrenzt ist.

5. Abgasturbolader gemäss Anspruch 4, **dadurch gekennzeichnet, dass** der Hohlraum (33) zwischen dem Verdichter und dem Filterschalldämpfer angeordnet, und durch ein Gehäuse des Filterschalldämpfers (40, 42, 43) und ein Verdichtergehäuse (22, 23) begrenzt ist.

6. Abgasturbolader gemäss einem der Ansprüche 1 oder 2, **dadurch gekennzeichnet, dass** der Abgasturbolader einen Verdichter mit einem Ansaugbereich umfasst, und dass der Hohlraum (34) radial ausserhalb des Verdichters angeordnet ist.

7. Abgasturbolader gemäss Anspruch 6, **dadurch gekennzeichnet, dass** der Hohlraum (34) durch ein Hohlraumgehäuse (37) begrenzt ist, welches radial ausserhalb eines Verdichtergehäuses (21) angeordnet ist.

8. Abgasturbolader gemäss einem der Ansprüche 1 oder 2, **dadurch gekennzeichnet, dass** der Hohlraum (35) durch ein Hohlraumgehäuse (37) begrenzt ist, welches an einem Filterschalldämpfer (40) des Abgasturboladers befestigt ist.

9. Abgasturbolader gemäss einem der Ansprüche 1 bis 8, **dadurch gekennzeichnet, dass** das Schüttgut Baustoffe wie Sand, Kies, Schotter und/ oder Stahlkugeln und/oder Pellets aus gepresstem Material umfasst.

10. Abgasturbolader gemäss einem der Ansprüche 1 bis 9, **dadurch gekennzeichnet, dass** dem Schüttgut Gummigranulat und/ oder Gummimehl beigemischt ist, und/oder dass der Hohlraum mit Schüttgut und einer Flüssigkeit gefüllt ist.

11. Abgasturbolader gemäss einem der Ansprüche 1 bis 10, **dadurch gekennzeichnet, dass** die Gehäusewände an der Innenseite des Hohlraums gehärtet oder aufgummiert sind.
